# EUROPÄISCHE PATENTSCHRIFT

(11) **EP 2 936 020 B1**
(45) Veröffentlichungstag und Bekanntmachung des Hinweises auf die Patenterteilung: **24.04.2019**
(21) Anmeldenummer: 13802991.3
(22) Anmeldetag: 11.12.2013
(51) Int. Cl.: E04B 5/02

(54) **WANDUNG FÜR EIN HAUSHALTSKÄLTEGERÄT MIT EINER HOCHGLANZ-POLYSTYROL UND/ODER SILBERTEILCHEN AUFWEISENDEN ABSCHLUSSSCHICHT SOWIE HAUSHALTSKÄLTEGERÄT MIT EINER DERARTIGEN WANDUNG**
WALL FOR A HOUSEHOLD REFRIGERATION APPLIANCE WITH A TOP LAYER COMPRISING HIGH-GLOSS POLYSTYRENE AND/OR SILVER PARTICLES AND HOUSEHOLD APPLIANCE COMPRISING SAID TYPE OF WALL
PAROI POUR UN APPAREIL DE FROID MÉNAGER POURVUE D'UNE COUCHE DE FINITION PRÉSENTANT DU POLYSTYRÈNE BRILLANT ET/OU DES PARTICULES ARGENTÉES, ET APPAREIL DE FROID MÉNAGER POURVU D'UNE TELLE PAROI

(30) Priorität: 18.12.2012 DE 102012223535
(43) Veröffentlichungstag der Anmeldung: 28.10.2015
(73) Patentinhaber: BSH Hausgeräte GmbH, 81739 München (DE)
(72) Erfinder: EHNINGER, Christian, 89537 Giengen an der Brenz (DE); RABUS, Wolfgang, 89542 Herbrechtingen (DE); SEELMEIER, Michael, 73572 Heuchlingen (DE)
(86) Internationale Anmeldenummer: PCT/EP2013/076288
(87) Internationale Veröffentlichungsnummer: WO 2014/095536

(56) Entgegenhaltungen:
- EP-A1- 0 533 388
- JP-A- 2007 253 974
- JP-A- 2009 079 762
- US-A- 5 219 665

## Beschreibung

Die Erfindung betrifft eine Wandung für ein Haushaltskältegerät, mit einer Hülle, die einen Hohlraum begrenzt, in dem ein thermisch isolierendes Material angeordnet ist. Die Hülle weist eine Schale auf, die mehrschichtig ausgebildet ist. Des Weiteren betrifft die Erfindung ein Haushaltskältegerät mit einer derartigen Wandung.

Aus der WO 2012/031885 A2 ist ein Gehäuse für ein Haushaltskältegerät bekannt. Eine Innenschale des Gehäuses, die eine Isolationsmaterialpackung zu einem Innenraum des Haushaltskältegeräts hin begrenzt, ist 5-lagig aufgebaut. Dieser Schichtenaufbau umfasst zwei Trägerschichten, zwischen denen sich eine Sperrschicht befindet, die wiederum beidseits mit einer Haftvermittlungsschicht verbunden ist, die dann an die Trägerschichten angrenzen.

Innenbehälter von Kühlgeräten oder Innentüren von Kühlgeräten werden typischerweise aus bekannten Kunststoffen, wie ABS (Acrylnitril-Sutadien-Styrol) oder Polystyrol, insbesondere HIPS, hergestellt. In dem Zusammenhang sind auch aus der WO 2012/031885 A2 mehrere derartige spezifische Kunststoffe genannt.

Spezifische Schichtenaufbauten zur Verwendung in Kühlmöbeln sind auch aus der DE 695 02 510 T2 bekannt.

Die EP 0 533 388 A1 beschreibt ein Kühlschrankgehäuse, welches mit einer Kunststoffauskleidung versehen ist. Dies Kunststoffauskleidung weist eine hohe Schlagfestigkeit auf und ist beständig gegen Fluorkohlenwasserstoffe und kann eine Abschlussschicht aus Hochglanz-Polystyrol aufweisen.

Es ist auch bekannt, dass bei moderneren Haushaltskältegeräten zur thermischen Isolation Vakuumisolationselemente in der Tür und/oder in den Innenraum begrenzenden anderen Wänden angeordnet sind. Diese sind üblicherweise mit einem thermisch isolierenden Schaumstoffmaterial umgeben.

Ferner beschreibt die JP 2009 079762 A eine Vakuumisolationsstruktur in Form einer Wandung gemäß dem Oberbegriff des Anspruchs 1, welche beispielsweise in einem Kühlschrank eingesetzt werden kann. Die Vakuumisolationsstruktur kann mehrere Schichten aufweisen. Beispielsweise kann ein Polyolefin verwendet werden, das mit einem Metall oder einem Metalloxid beschichtet ist. Eine Wandung der Vakuumisolationsstruktur kann auch 6-lagig ausgebildet sein.

Aus der JP 2007 253974 A ist ein Isolierbehälter bekannt, dessen Wandungen aus einem wärmeisolierenden Körper gebildet sind. Der wärmeisolierende Körper umfasst ein wärmeisolierendes Material und eine Dichtung. Ferner ist ein äußeres Oberflächenmaterial vorgesehen, welches mit Silber beschichtet sein kann.

Es ist Aufgabe der vorliegenden Erfindung, eine Wandung für ein Haushaltskältegerät sowie ein derartiges Haushaltskältegerät zu schaffen, welche bzw. welches funktionell verbessert ist.

Diese Aufgabe wird durch eine Wandung und ein Haushaltskältegerät gemäß den unabhängigen Ansprüchen gelöst.

Gemäß einem Aspekt der Erfindung ist eine Wandung für ein Haushaltskältegerät gemäß Anspruch 1 vorgesehen, welche eine Hülle aufweist, die einen Hohlraum begrenzt. In dem Hohlraum ist ein thermisch isolierendes Material angeordnet, wobei die Hülle eine Schale aufweist, die mehrschichtig ausgebildet ist. Ein wesentlicher Gedanke ist es, dass eine den Schichtenaufbau abschließende Abschlussschicht Hochglanz-Polystyrol aufweist und der Schichtenaufbau zumindest 6-lagig ausgebildet ist. Ferner ist die Wandung eine Vollvakuumtür des Haushaltskältegeräts. Eine derartige Spezifikation des Schichtenaufbaus bildet eine hochfunktionelle Wandung. Durch diese materialspezifizierte Abschlussschicht ist ein entsprechend optischer Aspekt erfüllt. Darüber hinaus ist durch die zumindest 6-Lagigkeit auch die Schlagfestigkeit verbessert. Darüber hinaus ist durch einen in der Anzahl der Lagen spezifizierten Schichtenaufbau die Diffusionsminderung gegenüber Atmosphärengasen wie Stickstoff, Sauerstoff, Kohlendioxid und Wasserdampf erreicht. Insbesondere auch durch die materialspezifizierte Abschlussschicht kann eine besonders vorteilhafte antibakterielle Ausgestaltung des Schichtenaufbaus erreicht werden. Darüber hinaus ist auch die Verbindbarkeit, insbesondere die Schweißbarkeit, mit anderen Kunststoffen erreicht und verbessert. Auch kann die Verarbeitung mit bekannten Kunststoffumformungen, wie beispielsweise einem Vakuumtiefziehen, einem Spritzgießen, einem Blasformen, einem Laminieren etc. weiterhin durchgeführt werden. Dadurch ist die Fertigung auch durch diesen 6-lagigen Schichtenaufbau mit der spezifizierten Abschlussschicht nicht beeinträchtigt. Ferner ist durch die spezifische Abschlussschicht, die auch sehr glatt ist, die Reinigbarkeit verbessert sowie die Kratzfestigkeit erhöht.

Jede Schicht kann mehrer Unterschichten aufweisen.

Vorzugsweise ist der Schichtaufbau genau 6-lagig.

Besonders vorteilhaft ist es, wenn die Wandung ein Vakuumisolationselement aufweist, und die Schale eine Schale des Vakuumisolationselements ist. Derartige Vakuumisolationselemente weisen eine besonders hervorzuhebende thermische Isolationswirkung auf. Besonders vorteilhaft ist es insbesondere somit dann, wenn gerade dieser 6-lagige Schichtenaufbau mit der materialspezifizierten Abschlussschicht auch zugleich die Schale dieses Vakuumisolationselements bildet. Bei den bisher bekannten Ausführungen und bekannten Schichtenaufbauten ist gerade eine ausreichende thermische Isolationswirkung bei Vakuumisolationselementen nicht möglich. Durch die erfindungsgemäße Spezifikation können nunmehr auch die oben genannten Vorteile bei Vakuumisolationselementen erreicht und verbessert werden und die grundsätzliche Realisierung bei derartigen Vakuumisolationselementen mit einem derartig spezifizierten Schichtenaufbau ermöglicht werden.

Ein wesentlicher Gedanke ist es, dass die Wandung ein Vakuumisolationselement aufweist, und die Schale eine Schale des Vakuumisolationselements ist und eine den Schichtenaufbau abschließende Abschlussschicht dieser Schale Hochglanz-Polystyrol aufweist. Somit ist eine Wandung geschaffen, die einen evakuierten Bereich umfasst, der im Hinblick auf seinen materiellen und schichtspezifizierten Aufbau konkretisiert ist. Dadurch lässt sich gerade bei Vakuumisolation eine Ausgestaltung realisieren, die den bereits oben genannten Vorteilen umfassend Rechnung trägt und diese entsprechend aufweist bzw. verbessert.

Die Wandung ist eine Vollvakuumwandung, was bedeutet, dass neben zumindest einem thermischen Isolationskörper in Form eines Vakuumisolationskörpers kein zusätzlicher thermischer Isolationsschaum vorgesehen ist, der dann das Vakuumisolationselement zumindest bereichsweise umgibt. Die Wandung ist eine Tür für das Haushaltskältegerät und ist als Vollvakuumtür ausgebildet. Bei zumindest gleicher thermischer Isolationswirkung kann dann die Dicke der Tür verringert werden, wodurch das Nutzvolumen des Innenraums erhöht werden kann.

Vorzugsweise ist es bei den Ausführungen vorgesehen, dass die Abschlussschicht eine Dicke zwischen 30µm und 50µm aufweist.

Vorzugsweise weist die Abschlussschicht eine Dicke kleiner als eine Dicke der ersten Trägerschicht und/oder größer als eine Dicke der ersten Haftvermittlungsschicht und/oder größer als eine Dicke der zweiten Haftvermittlungsschicht und/oder größer als eine Dicke der Sperrschicht und/oder größer als eine Dicke der zweiten Trägerschicht auf.

Ferner weist der Schichtenaufbau eine an die Abschlussschicht anschließende erste Trägerschicht auf. Die erste Trägerschicht kann aus Polystyrol oder ABS oder Polypropylen sein bzw. diese Materialien aufweisen.

Zudem sind auf die erste Trägerschicht folgend eine erste Haftvermittlungsschicht, dann eine diffusionsdichte Sperrschicht und dann wiederum eine zweite Haftvermittlungsschicht sowie eine dann folgende zweite Trägerschicht ausgebildet. Durch diesen spezifischen Schichtenaufbau ist gerade die Darlegung und Erläuterung der sechs Lagen gezeigt.

Besonders vorteilhaft ist es, wenn die erste Trägerschicht die dickste Schicht ist. Sie ist vorzugsweise dicker als die Summe der Dicken der beiden Haftvermittlungsschichten und der Sperrschicht. Es kann auch vorgesehen sein, dass die erste Trägerschicht dicker ist als die Summe der Dicken der Haftvermittlungsschichten, der Sperrschicht und der zweiten Trägerschicht.

Vorteilhaft ist es, wenn die Abschlussschicht dicker ist als eine Haftvermittlungsschicht und/oder dicker ist als die Sperrschicht und/oder dicker ist als die zweite Trägerschicht.

Gerade eine derartige Ausgestaltung der Dicke der Abschlussschicht im Verhältnis zu den Dicken einer oder mehrerer anderen Schichten sind die oben genannten Vorteile besonders begünstigt.

Die Sperrschicht kann beispielsweise EVOH (Ethylenvinylalkohol) oder PVdC (Polyvenylidenchlorid) aufweisen.

Die Dicke der Sperrschicht beträgt vorzugsweise zwischen 1 % und 20 %, vorzugsweise zwischen 3 % und 10 % der Dicke der Schale und somit des gesamten Schichtenaufbaus.

Es kann vorgesehen sein, dass die zweite Trägerschicht Polyethylen oder Polypropylen aufweist. Dadurch kann das Verbinden durch ein Schweißen mit anderen Materialien geeignet erfolgen.

In besonders vorteilhafter Weise ist vorgesehen, dass die Schale eine einem mit der Wandung zu begrenzenden Innenraum des Haushaltskältegeräts zugewandte Innenschale ist. Dadurch bildet die genannte Abschlussschicht den inneren Abschluss. Diese Innenschale ist somit quasi bei Betrachtung des Innenraums die sichtbare Schicht.

Des Weiteren betrifft die Erfindung ein Haushaltskältegerät mit einer erfindungsgemäßen Wandung oder einer vorteilhaften Ausgestaltung.

Das Haushaltskältegerät kann beispielsweise ein Kühlgerät oder ein Gefriergerät oder ein Kühl-Gefrier-Kombigerät sein. Es ist mit einem Innenraum ausgebildet und zur Aufnahme von Lebensmitteln wie beispielsweise Speisen oder Getränken ausgebildet.

Gerade dann, wenn die Wandung mit zumindest einem Vakuumisolationselement ausgebildet ist, ist dieses insbesondere mit einer Innenschale und einer Außenschale gestaltet, wobei in dem evakuierten Hohlraum dann auch ein Material als Stützkörper eingebracht sein kann. Dieses Material des Stützkörpers ist vorzugsweise Kieselsäure. Es sind jedoch auch andere Materialien wie Perlite, Glasfaser oder ein poröser Feststoff möglich.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung, der durch die nachfolgenden Ansprüche definiert ist, zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind, soweit sie unter den Schutzumfang der nachfolgenden Ansprüche fallen.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltskältegeräts;
- Fig. 2: eine perspektivische Ansicht von hinten einer als Tür ausgebildeten Wandung des Haushaltskältegeräts gemäß Fig. 1;
- Fig. 3: eine Explosionsdarstellung des Ausführungsbeispiels der Tür gemäß Fig. 2; und
- Fig. 4: eine Schnittdarstellung der Innenschale des Vakuumisolationselements der Tür gemäß Fig. 2 und Fig. 3.

In den Figuren werden gleiche oder funktionsgleiche Elemente mit den gleichen Bezugszeichen versehen.

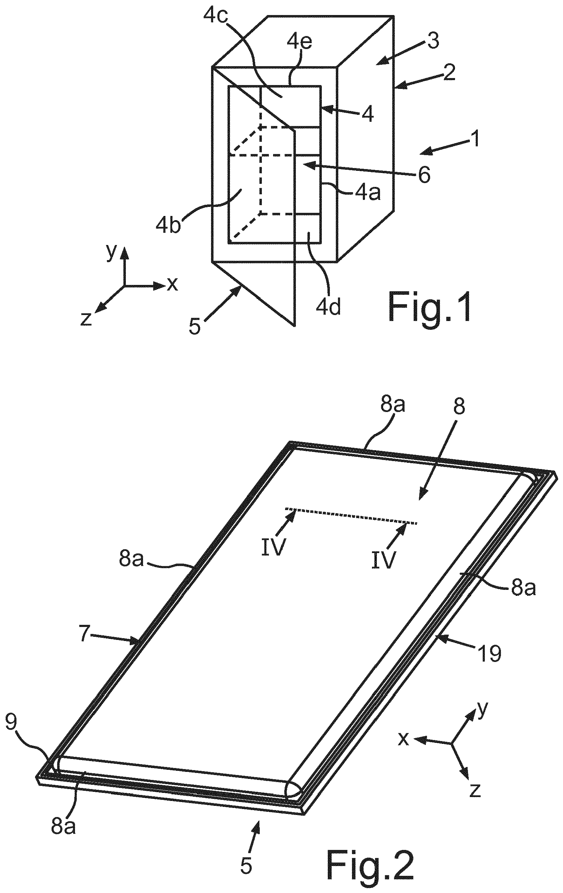

In Fig. 1 ist in einer perspektivischen Darstellung ein Haushaltskältegerät 1 gezeigt, welches zur Aufnahme von Lebensmitteln, wie beispielsweise Getränken und Speisen, ausgebildet ist. Das Haushaltskältegerät 1 kann beispielsweise ein Kühlgerät oder ein Gefriergerät oder ein Kühl-Gefrier-Kombigerät sein.

Das Haushaltskältegerät 1 umfasst ein Gehäuse 2, welches ein Außengehäuse bzw. einem Außenbehälter 3 und ein darin angeordnetes Innengehäuse umfasst, welches ein Innenbehälter 4 ist. Der Außenbehälter 3 umgibt den Innenbehälter 4, wobei beide frontseitig eine Beschickungsöffnung aufweisen, die durch eine Tür 5 verschließbar ist. Der Innenbehälter 4 begrenzt mit seitlichen Wänden bzw. seitlichen Wandungen 4a und 4b sowie einer Rückwand bzw. einer hinteren Wandung 4c, sowie einer Bodenwandung 4d und einer Deckenwandung 4e einen Innenraum 6. Abhängig davon, wie das Haushaltskältegerät 1 ausgebildet ist, kann dieser Innenraum vollständig ein Kühlfach sein oder ein No-Frost-Fach umfassen, oder ein Gefrierfach sein. Es kann auch vorgesehen sein, dass das Haushaltskältegerät 1 als Innenraum 6 ein Kühlfach aufweist, in dem innenliegend ein Gefrierfach integriert ist, welches insbesondere dann durch eine weitere eigene Gefrierfach-Tür verschließbar ist.

Im Ausführungsbeispiel ist vorgesehen, dass die Tür 5 zum Verschließen des Innenraums 6 eine Vollvakuumtür ist. Dazu ist vorgesehen, dass die Tür 5 zumindest ein Vakuumisolationselement, welches einen thermischen Isolationskörper darstellt, aufweist. Die Tür 5 stellt darüber hinaus ebenfalls eine Wandung des Haushaltskältegeräts 1 dar.

In Fig. 2 ist in einer perspektivischen Ansicht auch eine Innenseite 7 der Tür 5 mit dem Vakuumisolationselement 8 mit einem Umfangsrand 8a dargestellt. Die Tür 5 umfasst neben dem plattenartigen rechteckigen Vakuumisolationselement 8 einen Trägerrahmen 9. Der Trägerrahmen 9 umgreift umfangsseitig das Vakuumisolationselement 8 vollständig. Das Vakuumisolationselement 8 ist somit von dem Trägerrahmen 9 gehalten.

Der Trägerrahmen 9 ist ebenfalls rechteckig gestaltet und einstückig ausgebildet. Der Trägerrahmen 9 kann auch aus separaten Einzelteilen, beispielsweise den Trägerrahmenteilen 14 bis 17 aufgebaut sein, die zerstörungsfrei lösbar verbindbar sind.

Der Trägerrahmen 9 ist darüber hinaus aus Kunststoff ausgebildet und insbesondere als Spritzgussteil realisiert. Es kann vorgesehen sein, dass der Trägerrahmen 9 aus einem einzigen Kunststoffmaterial oder aus zumindest zwei unterschiedlichen Kunststoffmaterialien ausgebildet ist.

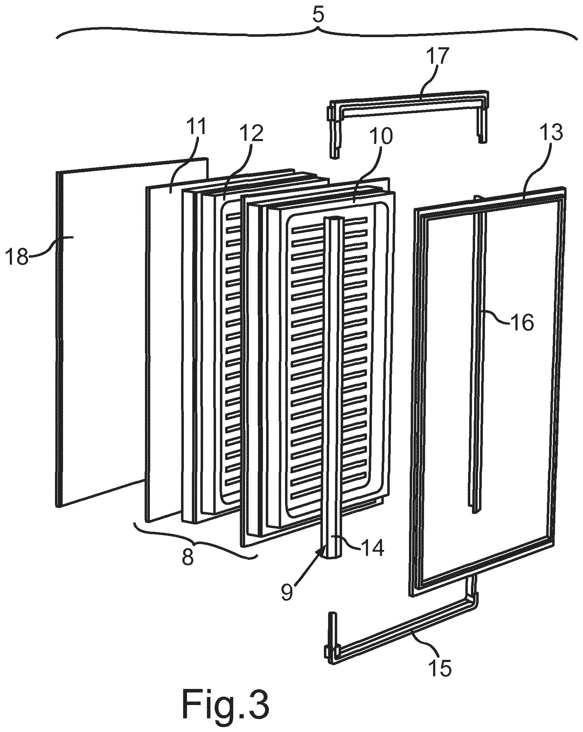

In Fig. 3 ist in einer Explosionsdarstellung die Tür 5 gezeigt.

Es ist dabei zu erkennen, dass das Vakuumisolationselement 8 eine hintere bzw. Innenschale 10 aufweist, die einstückig aus Kunststoff ausgebildet ist. Darüber hinaus umfasst das Vakuumisolationselement 8 eine vordere Schale bzw. eine Außenschale 11, welche ebenfalls einstückig aus Kunststoff ausgebildet ist. Im zusammengesetzten Zustand des Vakuumisolationselements 8 sind die beiden Schalen 10 und 11 miteinander verbunden. Beispielsweise kann hier ein Verkleben oder Verschweißen vorgesehen sein. In dem zwischen den Schalen 10 und 11 gebildeten Zwischenraum bzw. Hohlraum ist ein Füllkörper bzw. Stützkörper 12 eingebracht. Beispielsweise kann hier ein poröser Festkörper vorgesehen sein. In bevorzugter Weise ist Kieselsäure als Füllmaterial vorgesehen. Dieser Zwischenraum zwischen den Schalen 10 und 11 ist evakuiert.

Darüber hinaus ist in Fig. 3 eine umlaufende Dichtung 13 gezeigt, die im zusammengesetzten Zustand an dem Trägerrahmen 9 angeordnet ist. Der Trägerrahmen 9 ist somit multifunktionell gestaltet und zur Aufnahme mehrerer unterschiedlicher separater gegenständlicher Komponenten vorgesehen. Neben der Dichtung 13 kann darüber hinaus jedoch auch noch ein anderes Funktionsbauteil zusätzlich an dem Trägerrahmen 9 angeordnet sein. Beispielsweise können hier ein Scharnier und/oder eine Lagereinheit und/oder ein Versteifungsteil vorgesehen sein.

Im Ausführungsbeispiel umfasst der einstückig ausgebildete Trägerrahmen 9 durch seine rechteckige Formgebung vier Trägerrahmenteile 14, 15, 16 und 17. Die beiden Trägerrahmenteile 14 und 16, welche geradlinige längliche Bauteile sind, erstrecken sich vertikal und parallel. Ebenso erstrecken sich die horizontal angeordneten Trägerrahmenteile 15 und 17 parallel zueinander. Die einstückige Ausgestaltung des Trägerrahmens 9 ist insbesondere durch die während eines einzigen Herstellungsprozesses ausgebildete Form gestaltet. Es werden somit insbesondere keine Ausgestaltungen unter einer Einstückigkeit verstanden, die zunächst das Herstellen separater Trägerrahmenteile umfasst, die dann nachfolgend beispielsweise miteinander verklebt werden oder dergleichen.

Die Tür 5 umfasst darüber hinaus eine außenseitige bzw. frontseitige Abdeckung 18, die beispielweise ein plattenartiges Außenblech ist.

In zumindest einem der Trägerrahmenteile 14 bis 17 kann auch integriert und somit innenliegend ein metallisches Versteifungsteil eingebettet sein. Insbesondere ist diese Integration derart, dass das metallische Versteifungsteil vollständig von dem Kunststoffmaterial des Trägerrahmenteils 14 bis 17 umschlossen ist.

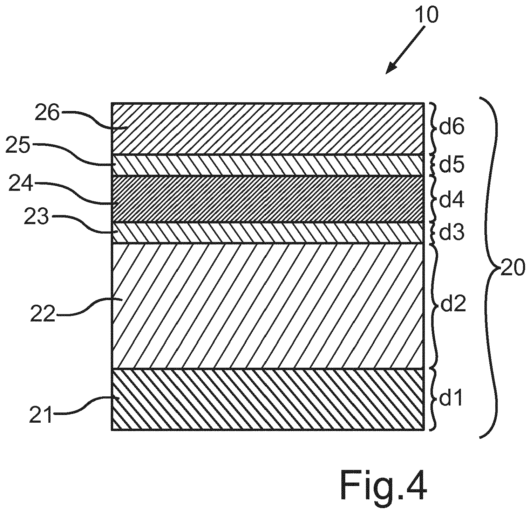

In Fig. 4 ist eine Schnittdarstellung der Innenschale 10, die mit der Außenschale 11 eine Hülle 19 des Vakuumisolationselements bildet, dargestellt. Die Innenschale 10 ist somit in der x-z-Ebene geschnitten dargestellt. Die Innenschale 10 weist einen Schichtenaufbau 20 auf, der 6-lagig gebildet ist und somit insbesondere ausschließlich aus diesen sechs Lagen besteht.

Der Schichtenaufbau 20 umfasst eine den Schichtenaufbau 20 zum Innenraum 6 hin abschließende Abschlussschicht 21. Diese Abschlussschicht 21 umfasst Hochglanz-Polystyrol. Insbesondere ist diese Abschlussschicht 21 aus Hochglanz-Polystyrol bestehend ausgebildet.

Der Schichtenaufbau 20 weist nach hinten und somit in Richtung der Außenschale 11 und dem Innenraum 6 abgewandt eine erste Trägerschicht 22 auf. Diese erste Trägerschicht 22 ist als Hauptschicht für die mechanische Festigkeit vorgesehen und kann beispielsweise Polystyrol oder ABS aufweisen bzw. aus diesen Materialien bestehend ausgebildet sein.

In Richtung der Außenschale 11 hin folgt auf die erste Trägerschicht 22 eine erste Haftvermittlungsschicht 23, welche auch als Verbindungsschicht oder Kleberschicht bezeichnet werden kann. In Richtung der Außenschale 11 hin gesehen folgt dann auf diese erste Haftvermittlungsschicht 23 eine diffusionsdichte bzw. diffusionshemmende Sperrschicht 24. Diese kann beispielsweise aus EVOH oder PVdC gebildet sein. Darüber hinaus schließt zur Außenschale 11 hin gesehen eine zweite Haftvermittlungsschicht 25 an, die aus dem gleichen oder einem unterschiedlichen Material wie die erste Haftvermittlungsschicht 23 ausgebildet sein kann. Sie kann die gleiche Dicke wie die erste Haftvermittlungsschicht 23 oder eine dazu unterschiedliche Dicke aufweisen. Abgeschlossen wird der Schichtenaufbau 20 nach hinten hin und somit in Richtung der Außenschale 11 hin betrachtet und somit auch dem Innenraum 6 abgewandt betrachtet durch eine zweite Trägerschicht 26. Diese kann Polyethylen aufweisen und dient auch zur vorzugsweise vorgesehenen randseitigen Verbindung mit der Außenschale 11. Sie kann daher auch als Schalenverbindungsschicht, insbesondere Schweißschicht, bezeichnet werden.

Wie aus der Darstellung in Fig. 4 zu erkennen ist, ist eine Dicke d1, die in z-Richtung bemessen ist, der Abschlussschicht 21 kleiner als eine Dicke d2 der ersten Trägerschicht. Die Dicke d1 ist andererseits jedoch größer als eine Dicke d3 der ersten Haftvermittlungsschicht. Im Ausführungsbeispiel ist auch vorgesehen, dass die Dicke d1 größer ist als eine Dicke d4 der Sperrschicht 24. Darüber hinaus ist die Dicke d1 auch größer als eine Dicke d5 der zweiten Haftvermittlungsschicht. Darüber hinaus ist vorzugsweise vorgesehen, dass die Dicke d1 größer ist als eine Dicke d6 der zweiten Trägerschicht 26.

Insbesondere ist vorgesehen, dass die Dicke d2 zumindest um das 1,5-fache, vorzugsweise um zumindest das 2-fache dicker ist als die Dicke d1. Darüber hinaus ist vorzugsweise vorgesehen, dass die Dicke zumindest das 2-fache, insbesondere zwischen dem 2-fachen und dem 10-fachen der Dicke d3 oder der Dicke d5 ist.

Darüber hinaus ist vorzugsweise vorgesehen, dass die Dicke d1 vorzugsweise zwischen dem 1,2-fachen und dem 2,5-fachen der Dicke d4 beträgt.

Vorzugsweise ist auch vorgesehen, dass die Dicke d1 vorzugsweise zwischen dem 1,2-fachen und dem 2,5-fachen der Dicke d6 beträgt.

Diese genannten Dickenverhältnisse können jeweils einzeln als auch in Kombination ausgebildet sein. Sie können auch davon abweichen.

Die Schichtdicken ergeben sich insbesondere aufgrund der funktionellen Anforderungen und/oder den Dicken der anderen Schichten und/oder der Materialien der anderen Schichten.

Die Tür 5 ist eine Vollvakuumtür.

Der Schichtenaufbau 20 kann auch zusätzlich oder anstatt dazu bei zumindest einer der Wände 4a bis 4e vorgesehen sein.

Ebenso ist eine Wandung möglich, die ohne ein Vakuumisolationselement ausgebildet ist, jedoch einen 6-lagigen Schichtenaufbau 20 aufweist, wie er beispielsweise zu Fig. 4 erläutert wurde und insbesondere eine Abschlussschicht 21 aufweist, die Hochglanz-Polystyrol aufweist.

## Patentansprüche

1. Wandung (4a bis 4e, 5) für ein Haushaltskältegerät (1), mit einer Hülle (19), die einen Hohlraum begrenzt, in dem ein thermisch isolierendes Material (12) angeordnet ist, wobei die Hülle (19) eine Schale (10, 11) aufweist, die mehrschichtig ausgebildet ist, wobei der Schichtenaufbau (20) 6-lagig ausgebildet ist, **dadurch gekennzeichnet, dass** eine den Schichtenaufbau (20) abschließende Abschlussschicht (21) Hochglanz-Polystyrol aufweist und die Wandung (4a bis 4e, 5) eine Vollvakuumtür des Haushaltskältegeräts (1) ist, wobei der Schichtenaufbau (20) einen an die Abschlussschicht (21) anschließende erste Trägerschicht (22) aufweist und auf die erste Trägerschicht (22) folgend eine erste Haftvermittlungsschicht (23), eine diffusionsdichte Sperrschicht (24), eine zweite Haftvermittlungsschicht (25) und eine zweite Trägerschicht (26) ausgebildet sind.

2. Wandung (4a bis 4e, 5) nach Anspruch 1, **dadurch gekennzeichnet, dass** die Wandung (4a bis 4e, 5) ein Vakuumisolationselement (8) aufweist, und die Schale (10, 11) eine Schale des Vakuumisolationselements (8) ist.

3. Wandung (4a bis 4e, 5) nach Anspruch 1 oder 2, **dadurch gekennzeichnet, dass** die Abschlussschicht (21) eine Dicke zwischen 30 µm und 50 µm aufweist.

4. Wandung (4a bis 4e, 5) nach einem der vorhergehenden Ansprüche, **dadurch gekennzeichnet, dass** die erste Trägerschicht (22) Polystyrol oder ABS aufweist.

5. Wandung (4a bis 4e, 5) nach einem der vorhergehenden Ansprüche, **dadurch gekennzeichnet, dass** die Sperrschicht (24) EVOH oder PVdC oder ein Metall, insbesondere Aluminium, und/oder die zweite Trägerschicht (26) Polyethylen aufweist.

6. Wandung (4a bis 4e, 5) nach einem der vorhergehenden Ansprüche , **dadurch gekennzeichnet, dass** eine Dicke (d1) der Abschlussschicht (21) kleiner als eine Dicke (d2) der ersten Trägerschicht ist und/oder größer als eine Dicke (d3) der ersten Haftvermittlungsschicht (23) ist und/oder größer als eine Dicke (d5) der zweiten Haftvermittlungsschicht (25) ist und/oder größer als eine Dicke (d4) der Sperrschicht (24) ist und/oder größer als eine Dicke (d6) der zweiten Trägerschicht (26) ist.

7. Wandung (4a bis 4e, 5) nach einem der vorhergehenden Ansprüche, **dadurch gekennzeichnet, dass** die Schale eine einem mit der Wandung (4a bis 4e, 5) zu begrenzenden Innenraum (6) des Haushaltskältegeräts (1) zugewandte Innenschale (10) ist.

8. Haushaltskältegerät (1) mit einer Wandung (4a bis 4e, 5) nach einem der vorhergehenden Ansprüche.

## Claims

1. Wall (4a to 4e, 5) for a household refrigeration appliance (1), with a covering (19) which bounds a cavity in which a thermally insulating material (12) is arranged, wherein the covering (19) has a tray (10, 11), which is embodied with multiple layers, wherein the layer structure (20) is embodied with six layers, **characterised in that** a closing layer (21) closing the layer structure (20) has high-gloss polystyrene and the wall (4a to 4e, 5) is a full vacuum door of the household refrigeration appliance (1), wherein the layer structure (20) has a first support layer (22) connecting to the closing layer (21), and a first adhesion-promoting layer (23), a diffusion-tight blocking layer (24), a second adhesion-promoting layer (25) and a second support layer (26) are embodied following the first support layer (22).

2. Wall (4a to 4e, 5) according to claim 1, **characterised in that** the wall (4a to 4e, 5) has a vacuum insulation element (8), and the tray (10, 11) is a tray in the vacuum insulation element (8).

3. Wall (4a to 4e, 5) according to claim 1 or 2, **characterised in that** the closing layer (21) has a thickness between 30µm and 50µm.

4. Wall (4a to 4e, 5) according to one of the preceding claims, **characterised in that** the first support layer (22) has polystyrene or ABS.

5. Wall (4a to 4e, 5) according to one of the preceding claims, **characterised in that** the blocking layer (24) has EVOH or PVDC or a metal, in particular aluminium, and/or the second support layer (26) has polyethylene.

6. Wall (4a to 4e, 5) according to one of the preceding claims, **characterised in that** a thickness (d1) of the closing layer (21) is less than a thickness (d2) of the first support layer and/or greater than a thickness (d3) of the first adhesion-promoting layer (23) and/or greater than a thickness (d5) of the second adhesion-promoting layer (25) and/or greater than a thickness (d4) of the blocking layer (24) and/or greater than a thickness (d6) of the second support layer (26).

7. Wall (4a to 4e, 5) according to one of the preceding claims, **characterised in that** the tray is an inner tray (10) facing an interior (6) of the household refrigeration appliance (1) to be bounded with the wall (4a to 4e, 5).

8. Household refrigeration appliance (1) with a wall (4a to 4e, 5) according to one of the preceding claims.

## Revendications

1. Paroi (4a à 4e, 5) pour un appareil frigorifique (1) à usage domestique, comprenant une enveloppe (19) qui délimite un espace creux dans lequel un matériau (12) thermiquement isolant est disposé, l'enveloppe (19) présentant une coque (10, 11) qui est réalisée en multicouches, la structure en couches (20) étant réalisée en 6 couches, **caractérisée en ce qu'**une couche terminale (21) terminant la structure en couches (20) présente du polystyrène brillant et **en ce que** la paroi (4a à 4e, 5) est une porte entièrement sous vide de l'appareil frigorifique (1) à usage ménager, la structure en couches (20) présentant une première couche de support (22) se raccordant à la couche terminale (21) et, succédant à la première couche de support (22), une première couche d'agent adhésif (23), une couche barrière (24) étanche à la diffusion, une deuxième couche d'agent adhésif (25) et une deuxième couche de support (26) étant réalisées.

2. Paroi (4a à 4e, 5) selon la revendication 1, **caractérisée en ce que** la paroi (4a à 4e, 5) présente un élément d'isolation sous vide (8), et **en ce que** la coque (10, 11) est une coque de l'élément d'isolation sous vide (8).

3. Paroi (4a à 4e, 5) selon la revendication 1 ou 2, **caractérisée en ce que** la couche terminale (21) présente une épaisseur comprise entre 30 µm et 50 µm.

4. Paroi (4a à 4e, 5) selon l'une quelconque des revendications précédentes, **caractérisée en ce que** la première couche de support (22) présente du polystyrène ou de l'ABS.

5. Paroi (4a à 4e, 5) selon l'une quelconque des revendications précédentes, **caractérisée en ce que** la couche barrière (24) présente de l'EVOH ou du PVdC ou un métal, notamment de l'aluminium, et/ou **en ce que** la deuxième couche de support (26) présente du polyéthylène.

6. Paroi (4a à 4e, 5) selon l'une quelconque des revendications précédentes, **caractérisée en ce qu'**une épaisseur (d1) de la couche terminale (21) est inférieure à une épaisseur (d2) de la première couche de support et/ou est supérieure à une épaisseur (d3) de la première couche d'agent adhésif (23) et/ou supérieure à une épaisseur (d5) de la deuxième couche d'agent adhésif (25) et/ou supérieure à une épaisseur (d4) de la couche barrière (24) et/ou supérieure à une épaisseur (d6) de la deuxième couche de support (26).

7. Paroi (4a à 4e, 5) selon l'une quelconque des revendications précédentes, **caractérisée en ce que** la coque est une coque intérieure (10) tournée vers un espace intérieur (6) de l'appareil frigorifique (1) à usage domestique, à délimiter par la paroi (4a à 4e, 5).

8. Appareil frigorifique (1) à usage domestique comprenant une paroi (4a à 4e, 5) selon l'une quelconque des revendications précédentes.
